Europäisches Patentamt

European Patent Office

Office européen des brevets

(11) Publication number: **0 430 339 A2**

## (12) EUROPEAN PATENT APPLICATION

(21) Application number: 90203044.4

(22) Date of filing: 16.11.90

(51) Int. Cl.⁵: **G02B 13/16, G02B 13/18**

(30) Priority: 22.11.89 GB 8926347

(43) Date of publication of application:
**05.06.91 Bulletin 91/23**

(84) Designated Contracting States:
**DE FR GB IT NL Bulletin 2**

(71) Applicant: PHILIPS ELECTRONIC AND
ASSOCIATED INDUSTRIES LIMITED
Philips House 188 Tottenham Court Road
London W1P 9LE(GB)

(84) GB

Applicant: N.V. Philips' Gloeilampenfabrieken
Groenewoudseweg 1
NL-5621 BA Eindhoven(NL)

(84) DE FR IT NL

(72) Inventor: Clarke, John Alfred
c/o Philips Research Laboratories, Redhill
Surrey RH1 5HA(GB)

(74) Representative: Clark, Jane Anne et al
PHILIPS ELECTRONICS Patents and Trade
Marks Department Philips House 188
Tottenham Court Road
London W1P 9LE(GB)

(54) A projection lens system.

(57) A lens system (3) for projecting an enlarged image of a concave object surface (S1), such as provided by a cathode ray tube, onto a planar display screen (5) has a first lens element (L1) for arrangement adjacent the object surface (S1) and, sequentially following the first lens element (L1), second, third and fourth lens elements (L2, L3 and L4) having respective powers K2, K3 and K4 such that:
$-0.20K \leq K2 \leq 0.0K$
$0.75K \leq K3 \leq 1.00K$ and
$0.3K \leq K4 \leq 0.45K$,
where K is the power of the lens system. When arranged adjacent the object surface (S1), the first lens element (L1) has an effective power K1 which is negative with respect to the power K of the overall lens system. At least two (L1, L2, L4) of the lens elements each have at least one (S4, S6, S9) aspheric surface.

EP 0 430 339 A2

FIG.2

# A PROJECTION LENS SYSTEM

This invention relates to a projection lens system for projecting an enlarged image of a concave object surface onto a planar display screen.

In particular this invention is concerned with the provision of a lens system designed for use within a projection television (TV) set where the concave object surface is provided by a phosphor layer formed on an inwardly convex faceplate of a cathode ray tube (CRT) and the planar display screen is a translucent screen.

EP-A-O 188 016 (corresponding to US-A-4 699 476) describes such a lens system. As discussed in EP-A-O 188 016 it is desirable to reduce the distance between the CRT and the translucent screen so as to keep to a minimum the depth of the television cabinet. This can be achieved by the use of mirrors and more importantly by the use of a wide angle lens system, that is a lens system capable of projecting at field angles of ± 30 degrees or more. In addition, because by convention three separate CRTs are used for colour projection TV sets and because lenses having aspherical surfaces may be used, the number of lens elements required can be reduced. The lens system described in EP-A-O 188 016 has a first lens element of negative power, that is a diverging lens element, arranged to be positioned adjacent the concave object surface, second and third lens elements of positive power and a low power fourth lens element remote from the object surface, with at least two aspheric lens element surface and with the relative powers of the lens elements being selected as defined in EP-A-188 016 so as to provide a wide angle lens system with improved light transmission and resolution.

It is an aim of the present invention to provide a lens system which with respect to that described in EP-A-O 188 016, provides even better light collection efficiency especially for the periphery of the image at the object surface.

According to a first aspect of the present invention, there is provided a lens system for projecting an enlarged image of a concave object surface onto a planar display screen, characterised in that the lens system comprises a first lens element for arrangement adjacent the object surface and, arranged sequentially following the first lens element, second, third and fourth lens elements having respective powers K2, K3 and K4 selected such that the power K2 of the second lens element lies in the range of from about -0.20K to about 0.0K, the power K3 of the third lens elements lies in the range of from about 0.75K to about 1.00K and the power K4 of the fourth lens element lies in the range of from about 0.3K to about 0.45K, where K is the power of the lens system, the first lens element having a power selected such that when the first lens element is arranged adjacent the object surface the first lens element has an effective power K1 which is negative with respect to the power K of the lens system, and at least two of the lens elements each having at least one aspheric surface.

The lens system has an acceptance cone defined, as is conventional in the art, as the solid angle within which, for a given point on the object surface, light is accepted or is capable of being transmitted by the lens system. This solid angle is generally symmetric about the optical axis for parts on the axis but tilts over or becomes more oblique and less symmetric for parts off the optical axis. Using a lens system in accordance with the first aspect of the invention, the obliquity of the acceptance cone that the lens system subtends at the object surface is reduced because a substantial proportion of the power of the lens system is concentrated within the third lens element. This reduction of obliquity enables the lens system to collect more light whilst avoiding any significant increase in the geometric distortion of the image relative to the object.

The fact that a substantial proportion, that is greater than or equal to 75 percent, of the overall lens power K is concentrated in the third lens element means that, for the lens system to be thermally stable, only the third lens element need be made of glass and the other lens elements can be made of a suitable plastics material such as an acrylic or polycarbonate.

A coupling medium may be provided in contact with the first lens element for positioning between the first lens element and the concave object surface, for example the phosphor layer provided on the inwardly convex faceplate of a CRT. Alternatively the first lens element may be arranged to be surrounded by air or to be itself in contact with the faceplate of a CRT.

Where the coupling medium element is provided then it may comprise a liquid coolant for the object surface. The contacting surfaces of the first lens element and the coupling medium element may be planar or appropriately curved and the coupling medium element may vary in thickness to conform to the opposing surfaces of the object surface and the first lens element.

In a preferred embodiment, each of the first, second and fourth lens elements may have at least one aspherical surface whilst both surfaces of the third lens element may be spherical. In particular, the surfaces

3

of the first, second and fourth lens elements facing the third lens element may be aspherical which should facilitate manufacture of the lens system.

Typically, the lens system may have a relative aperture of F/1 and a nominal magnification from about 7 to about 10. Generally, for an object surface of about 5 to 6 inches (13 to 15cm) diameter (that is the internal diameter of a CRT where the lens system is for use in a projection TV), the object surface may have a radius of curvature of about 350mm whilst the lens system may have, in operation (that is including the effects of the object surface), an overall focal length of about 95mm. Adjacent surfaces of the lens elements may be separated so that, for example, the adjacent surfaces of the first and second lens elements are as close as practically possible bearing in mind their respective curvatures and so that the fourth lens element is as far from the third lens element as is practically possible bearing in mind the normal constraints on the overall length of the lens system. Typically, the separation along the optical axis of adjacent surfaces of the first and second, second and third, and third and fourth lens elements may be in the ranges 0.3/K to 0.5/K 0 to 0.35/K, and 0.3/K. The separation of the object surface and the adjacent surface of the first lens element will depend on the thickness of any coupling element which may be used and on the thickness of the faceplate FP. The lens system in combination with the faceplate of a cathode ray tube having an interior surface providing the object surface may be substantially as described in Table I, Table II or Table III of the following description.

In a second aspect, the present invention provides a projection system comprising a cathode ray tube having a faceplate having an interior surface providing the object surface and a lens system in accordance with the first aspect. The interior surface of the faceplate may be provided with an interference filter, such as described in US-A-4 683 398, 4 634 926 or 4 647 812. In this case, the lens system has the advantage of being capable of ensuring that light is collected at angles within the restricted emission angles of a CRT provided with an interference filter even at the extreme periphery of the object or picture at the interior surface of the CRT faceplate. Also, the lens system may be optimised for these angles which should provide improved resolution.

Embodiments of the invention will now be described, by way of example, with reference to the accompanying drawings, in which:

Figure 1 is a schematic diagram illustrating the layout of a projection television set incorporating a lens system in accordance with the invention;

Figure 2 is a schematic cross-sectional view through a first embodiment of a lens system in accordance with the invention;

Figure 3 illustrates the modulation transfer function (MTF) for the lens system shown in Figure 2 at various different object positions measured at different distances from the optical axis of the lens system;

Figure 4 is a schematic cross-sectional view through a second embodiment of a lens system in accordance with the invention;

Figure 5 illustrates the modulation transfer function (MTF) for the lens system shown in Figure 4 at various different object positions measured at different distances from the optical axis of the lens system;

Figure 6 is a schematic cross-sectional view through a third embodiment of a lens system in accordance with the invention; and

Figure 7 illustrates the modulation transfer function (MTF) for the lens system shown in Figure 6 at various different object positions measured at different distances from the optical axis of the lens system.

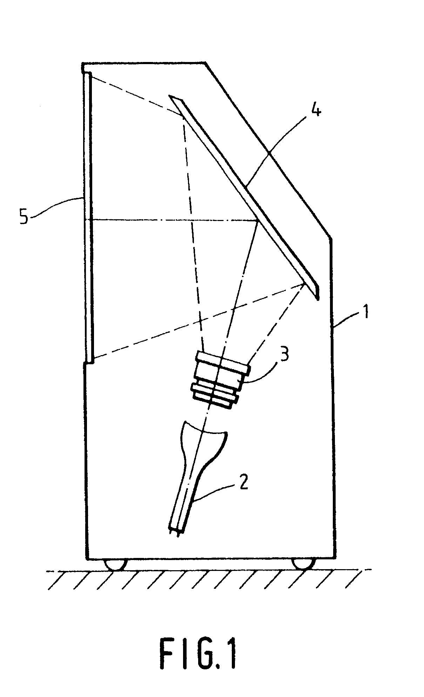

It should of course be understood that Figures 1,2,4, and 6 are not to scale and that similar reference numerals are used to indicate similar components throughout the Figures.

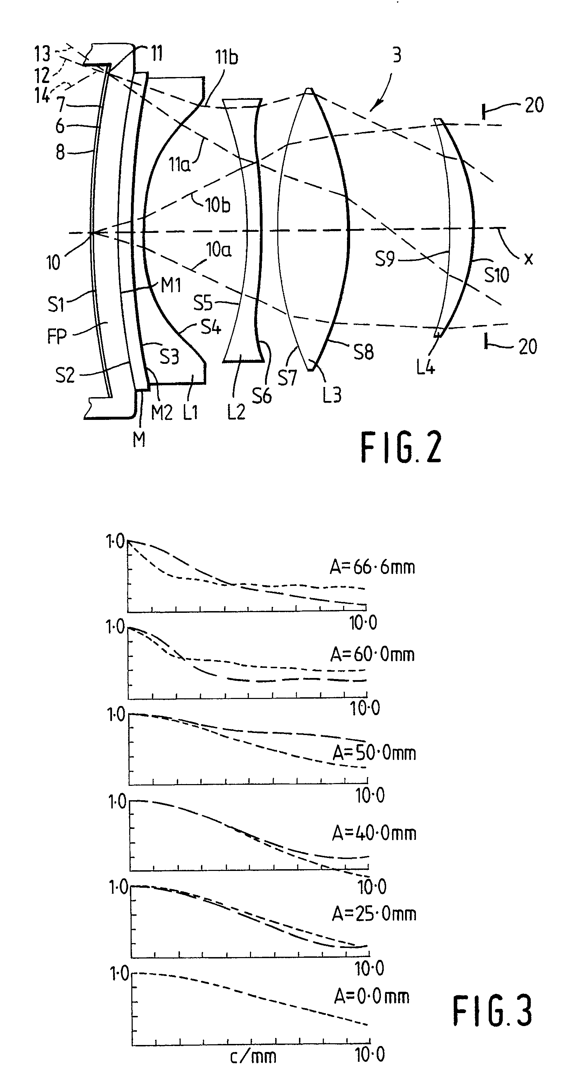

Referring now to Figure 1 and anyone of Figures 2,4, and 6, there is illustrated a lens system 3 for projecting an enlarged image of a concave (when viewed from the lens system 3) object surface S1 onto a planar display screen 5. In accordance with the invention, the lens system comprises a first lens element L1 for arrangement adjacent the object surface S1 and, arranged sequentially following the first lens element L1, second, third and fourth lens elements L2, L3 and L4 having respective powers K2, K3 and K4 such that:

$-0.20K \leq K2 \leq 0.0K$

$0.75K \leq K3 \leq 1.00K$ and

$0.3K \leq K4 \leq 0.45K$,

where K is the power of the lens system, the first lens element L1 having a power selected such that, when the first lens element L1 is arranged adjacent the object surface S1, the first lens element L1 has an effective power K1 which is negative with respect to the power K of the overall lens system, and at least two L1, L2, L4 of the lens elements each having at least one S4, S6, S9 aspheric surface.

It should be understood that, as used herein, the power $K_x$ of a lens element x is defined as

4

$$k_x = \frac{1}{f_x} \, ,$$

where $f_x$ is the focal length of the lens element x.

The lens system 3 has an acceptance cone defined, as is conventional in the art, as the solid angle within which, for a given point on the object surface, light is accepted or is capable of being transmitted by the lens system 3. This solid angle is generally symmetric about the optical axis x of the lens system for points on axis but tilts over with respect to the optical axis and is no longer symmetric for points off axis. Because, using such a lens system, a substantial proportion of the power of the lens system is concentrated within the third lens element L3, the obliquity of the acceptance cone that the lens system subtends at the object surface is reduced. As the intensity of the light tends to reduce for higher angles, this reduction of obliquity enables the lens system to collect more light whilst avoiding any significant increase in the geometric distortion of the image relative to the object.

Also, the fact that a substantial proportion (greater than or equal to about 75 percent) of the overall power K of the lens system is concentrated in the third lens element L3 means that the thermal stability, that is the degree to which the characteristics, for example the focal length, of the lens system change with temperature, of the lens system is only significantly affected by the third lens element L3. Accordingly, only the third lens element L3 need be made of a highly thermally stable material such as glass whilst the other lens elements L1,L2 and L4 can be made of a suitable plastics material, for example an acrylic such as polymethylmethacrylate (PMMA), polycarbonate or polystyrene.

A lens system 3 in accordance with the invention is particularly suited for use within a projection TV set and a schematic layout for a projection TV set incorporating such a lens system 3 is shown in Figure 1.

Thus, as shown in Figure 1, the projection TV set comprises a free standing cabinet 1 within which is mounted (by means not shown) a cathode ray tube (CRT) 2, the lens system 3, and a front metallised mirror 4 for folding the optical path P for projecting an image from the CRT 2 onto a translucent screen 5 mounted within the front of the cabinet 1. The translucent screen 5 may be a compound screen comprising one or more of the following, a Fresnel lens, a light scattering component, a lenticular element and light absorbing areas. It will be appreciated by those skilled in the art that where the TV is a colour TV, three separate CRTs will be provided, each with a respective lens system, usually arranged so that the two not shown in Figure 1 are on either side of the CRT 2 (i.e. above and below the plane of the paper) with the respective lens systems arranged to project the three primary colour pictures in coincidence on the translucent screen 5.

Various different embodiments of a lens system in accordance with the invention and suitable for incorporation within the projection TV set shown in Figure 1 will now be described. It will be evident from the following that although the CRT 2 and lens system 3 are shown separated in Figure 1 in the interests of clarity, this is not necessarily the case.

Figure 2 illustrates a first embodiment of a lens system 3 in accordance with the invention in combination with the faceplate FP of the CRT 2.

In this example the faceplate FP of the cathode ray tube 2 has curved exterior and interior surfaces S2 and S1 so that the inner surface S1 is convex when viewed from within the CRT 2. A conventional phosphor layer 6 is deposited on the interior surface S1 of the faceplate and so, by virtue of the convex nature of the interior surface S1 of the faceplate FP, provides an outwardly concave (that is concave when viewed from the lens system 3) object surface S1 which may, for example, have a radius of curvature of about 300 to 350mm. An interference filter 7, for example of the type described in US-A-4 683 398, US-A4 634 926 or US-A-4 647 812, may be provided between the phosphor layer 6 and the interior surface S1 of the faceplate FP. A thin reflecting metallic layer 8 may be provided on the phosphor layer 6.

In this example, the first lens element L1 has a first surface S3 which is to be positioned adjacent the exterior surface S2 of the faceplate FP and an aspherical second surface S4 which has a central portion which is arranged to be convex towards and directed away from the faceplate FP. In the example shown, the faceplate FP of the CRT 2 and the first surface S3 of the first lens elements L1 are similarly curved so that the intervening coupling medium element M has two opposed similarly curved surfaces M1 and M2 shaped to conform to the surfaces S2 and S3 is positioned between and in contact with the surfaces S2 and S3. The coupling medium element M may comprise or contain a liquid coolant, such as a water and glycol mixture, for cooling the faceplate FP in conventional manner. Alternatively, the first lens element L1 may be separated from the exterior surface S2 of the faceplate FP by an air gap or may be substantially in contact with the exterior surface S2 of the faceplate FP.

Although shown as curved, one or both of the surfaces S2 and S3 may be planar.

In the example shown in Figure 2, the second lens element L2 has a first spherical surface S5 and a second aspherical surface S6 with the central portions of the surfaces S5 and S6 being concave when viewed from the CRT 2. The third lens element L3 has first and second spherical surfaces S7 and S8 with the first surface S7 facing towards the faceplate FP so that the first surface S7 is convex when viewed from the CRT 2 and the second surface S8 concave. The fourth lens element L4 has a first aspherical surface S9 which faces towards and has a central portion which appears concave when viewed from the CRT 2 and a second spherical surface S10 which appears concave from the CRT 2. An aperture or stop 20 is provided adjacent the fourth lens element L4 on the side remote from the third lens element L3.

In accordance with the invention, a substantial proportion of the overall power K of the lens system is concentrated in the third lens element L3 with, in this example, the respective relative powers K2,K3 and K4 of the second, third and fourth lens elements L2,L3 and L4 being such that K2 = -0.08K, K3 = 0.9K and K4 = 0.38K and the effective power K1 of the first lens element L1, that is the power of the first lens element L1 combined with the power of the faceplate FP and of the coupling medium element M, being -0.1K.

Table I of the Appendix attached to the end of this description gives the detailed specification of the lens elements L1, L2, L3 and L4, faceplate FP and coupling medium element M of the arrangement shown in Figure 2 with surfaces which are convex when viewed from the CRT 2 being given a positive radius of curvature and surfaces which are concave when viewed from the CRT 2 being given a negative radius of curvature.

The aspheric surfaces S4, S6 and S9 are defined in accordance with the equation:

$$z = \left( \frac{Cs^2}{1 + (1-eC^2s^2)} \right) + a_4 s^4 + a_6 s^6 + a_8 s^8 + a_{10} s^{10}$$

where z is the deviation, in the axial direction, of the surface from a plane normal to the optical axis X and tangential to the surface at its pole for a zone of the surface which is at a distance s from the axis, C is the curvature of the surface at its pole, e is a conic constant, and $a_4$, $a_6$ $a_8$ and $a_{10}$ are constants for the surface.

Figure 3 illustrates the modulation transfer function (MTF) at various different object points measured at a distance A perpendicular to the optical axis x for the lens system shown in Figure 2 and defined in Table I where the diameters of the lens elements are selected to give a relative aperture of F/1.1. The lens system 3 may have a nominal magnification of 8.7 and a total throw distance from object surface S1 to image of 1050mm. The modulation is shown for spatial frequencies from 0 to 10 cycles $mm^{-1}$ (c/mm) as measured at the surface S1 of the CRT faceplate FP with in each case the long dash line illustrating the tangential and the short dash line illustrating the sagital MTF.

Of course, the design may be scaled using conventional techniques to achieve other relative apertures, magnifications and throw distances.

In operation of a projection TV set incorporating the lens system 3 shown in Figure 2, electrons from the electron gun (not shown) of the CRT 2 impinge on the phosphor layer 6 which then emits light in all directions. The thin reflecting metallic layer 8 serves to intercept and reflect light emitted towards the electron gun. Where the interference filter 7 is not present, most of the forwardly directed light is refracted at the interior surface S1 of the faceplate FP into the faceplate. Where an interference filter 7 of the type described in US-A-4 634 926 or US-A-4 647 812 is provided then light incident in the filter 7 at angles greater than a specified constant value determined by the characteristics of the filter 7 is reflected back towards the phosphor layer 8 and may subsequently after scattering in the phosphor layer 6 and/or after reflection at the thin metallic layer 8 be re-directed back towards the interference filter 7.

Light refracted into the faceplate FP travels via the lens elements L1, L2, L3 and L4 to the translucent screen where the final image is formed.

Figure 2 also shows the paths through the projection lens of four rays of light. Two 10a, 10b of these start in the phosphor layer 6 from a point 10 which is on the axis X of the projection lens, while the other two 11a, 11b start in the phosphor layer 6 from a point 11 which is a significant distance from the axis X of the projection lens system. Each pair of rays is chosen to represent the upper and lower extremes of the acceptance cone of the projection lens system 3. Also shown at point 11 is the normal 12 to interior surface S1 of the faceplate. The light transmitted by an interference filter 7 of the type disclosed in U.S. Patent No. 4 634 926 and 4 647 812 is restricted to a solid cone centred on this normal, the upper and lower extremes being represented by lines 13 and 14. It can be seen that the acceptance angles of the lens, represented by the rays from point 11, lie substantially within the emission cone represented by lines 13 and 14.

For the lens system shown in Figure 2, the extreme corners of the picture on the CRT faceplate FP lie at 66.6mm from the axis X of the lens. At this picture point, the upper and lower angles of the acceptance cone of the lens, represented by the rays from point 11, are 26.6 degrees and 48.5 degrees from the lens axis X respectively. The normal 12 to faceplate surface S1 at this point is tilted by 12.8 degrees to the lens axis X. When allowance is made for this tilt, the lens accepts light in a cone lying between 13.8 degrees and 35.7 degrees from the normal 12 to the faceplate FP. Since typical emission cut-off angles for a CRT with an interference filter according to U.S. Patents 4 634 926 and 4 647 812 are approximately 40 degrees, it can be seen that the aperture of lens system 3 shown in Figure 2 is substantially filled by light emitted from the CRT 2 at this point. For picture points which are at smaller distances from the lens axis X, the situation is even better. For example at 40mm from the lens axis, the acceptance cone of the lens lies between 1.8 degrees and 32.8 degrees from the normal to surface S1 of the faceplate FP.

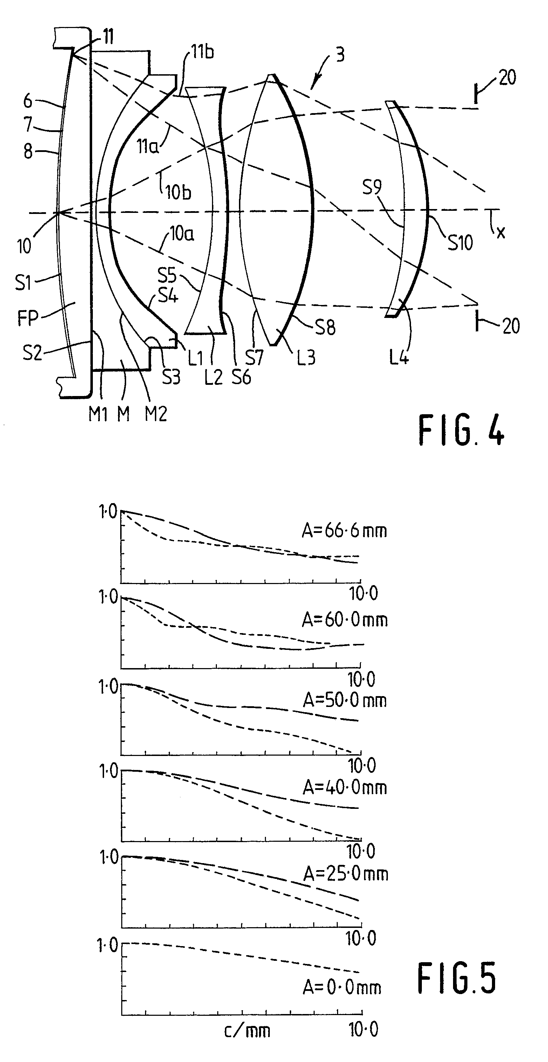

Figure 4 illustrates a second embodiment of a lens system in accordance with the invention.

In this example, the exterior surface S2 of the faceplate FP is planar and the coupling medium element M has a first planar surface M1 abutting the surface S2 of the faceplate and a convex (when viewed from the CRT 2) surface M2 abutting a complementary convex first surface S3 of the first lens element L1. Again, as will be evident from Table II of the Appendix which specifies in detail the characteristics of the lens system shown in Figure 4, the surfaces S4, S6 and S9 are aspheric with the central portion of the surfaces S4 and S7 being convex when viewed from the CRT.

In this example, the effective power K1 of the first lens elements L1, that is the power of the first lens element L1 combined with the power of the coupling medium M and the faceplate FP, is -0.22K whilst the powers K2, K3 and K4 of the second, third and fourth lens elements L2, L3 and L4 are -0.12K, 0.94K and 0.37K, respectively.

Again the path of four light rays 10a,10b,11a,11b through the lens system is shown in Figure 4. For the lens system shown in Figure 4, the upper and lower angles of the acceptance cone are 18.4 degrees and 38.4 degrees from the normal to surface S1 for a picture point at 66.6mm from the lens axis, and 1.5 degrees and 34.6 degrees from the normal for a picture point at 40mm from the lens axis.

Figure 5 illustrates the modulation transfer functions (MTF) for the lens system 3 of Figure 4 where the relative aperture, nominal magnification, and total throw are as given for the lens system of Figure 2.

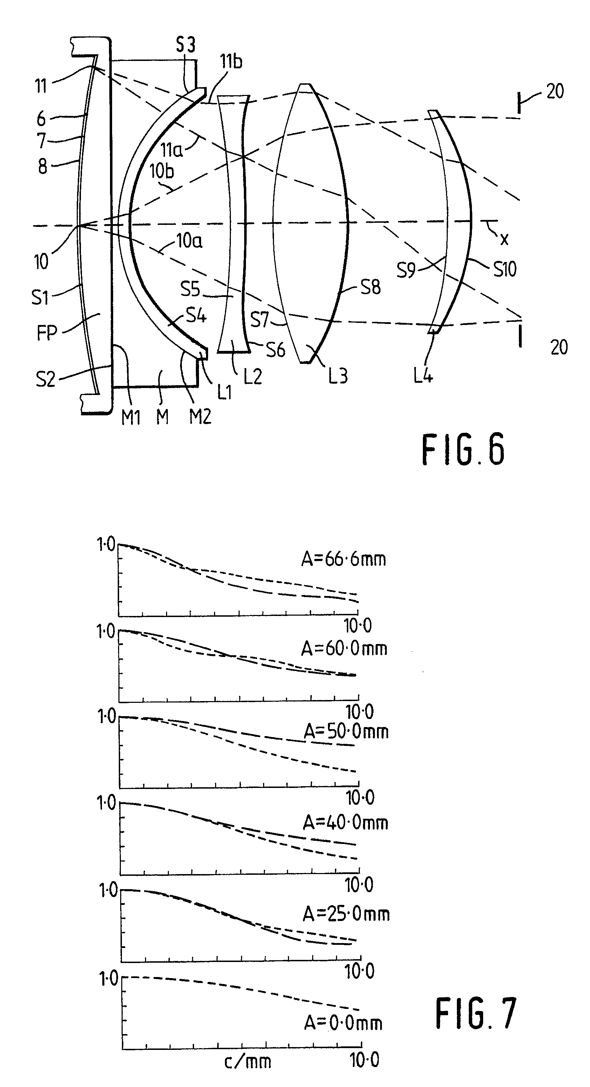

Figure 6 illustrates a third embodiment of a lens system in accordance with the invention for which the specific details are given in Table III. Figure 7 illustrates the MTF, equivalent to that given in Figure 3, for the lens system of Figure 6 where the lens system has the same relative aperture, nominal magnification and total throw as the lens system shown in Figure 2.

In the example shown in Figure 6, the coupling medium element M lies between the planar surface S2 of the faceplate FP and the convex surface S3 of the first lens element L1 with the thickness of the first lens element L1 being substantially constant. In this example the effective power K1 of the first lens element L1, that is the power of the first lens element L1 combined with the power of the coupling medium M and the faceplate FP, is -0.19K whilst the relative powers K2, K3 and K4 of the second, third and fourth lens elements L2, L3 and L4 are -0.05K, 0.9K and 0.35K respectively. Again, the surfaces S4, S6 and S9 are aspheric. In the lens system shown in Figure 6, the upper and lower angles of the acceptance cone are 11.4 degrees and 35.5 degrees from the normal to surface S1 for a picture point at 66.6mm from the lens axis, and 1.3 degrees and 33.2 degrees from the normal for a picture point at 40mm from the lens axis.

It will, of course, be appreciated by those skilled in the art that the specific dimensions given in Tables I to III may be varied as required to achieve a desired result and are only examples. In particular, for a lens system having, in operation (that is with the effect of the object surface taken into account), an overall focal length of about 95mm and for a concave object surface having a diameter of about 5 to 6 inches (about 13 to 15cm), this being the internal diameter of the cathode ray tube in the examples described above, and having a radius of curvature of about 300 to 350mm, then the axial separation of surfaces S4 and S5, S6 and S7, and S8 and S9 may be in the region of 0.3/K to 0.5/K, 0 to 0.35/K, and 0.4/K to 0.5/K, respectively. The axial separation of the object surface S1 and the surface S3 of the first lens element L1 will depend, of course, on the thickness of the coupling element M and on the thickness of the faceplate FP. Generally, the adjacent surfaces S4 and S5 of the first and second lens elements L1 and L2 should be as close as is practically possible bearing in mind their respective curvatures whilst the fourth lens element L4 should be as far as possible from the third lens element L3 bearing in mind the physical constraints on the overall length of the lens system. In each case, the lens aperture 20 should be just beyond the fourth lens element L4.

In addition although in the example described above, the surfaces S4, S6 and S9 are aspheric, others of the surfaces may be formed to be aspheric. Forming the surface S4 as an aspheric surface rather than the surface S3 has the advantage of facilitating manufacture because the asphericity does not have to be so large to achieve the desired effect. In contrast, it is possible to form surface S5 as an aspheric surface rather than surface S6 and provide a lens of comparable performance. It is also desirable for the surface S9 rather than the surface S10 to be aspheric because, should the exposed surface S10 of the lens system be damaged in assembly, it can be more easily reground if it is a spherical surface.

A lens system in accordance with the invention has been designed so as to reduce the lens acceptance angles whilst giving the required distortion characteristics without significantly increasing the number of lens elements and with little loss of resolution.

Although in the various arrangements described above, the third lens element L3 has two spherical surfaces S7 ad S8, this lens element may alternatively have one or two aspherical surfaces. However, as it is desirable to make the third lens element L3 from glass or another thermally stable material it is preferred from a manufacturing view point that the third lens element L3 have spherical surfaces. If it is desired to provide the third lens element with one or more aspheric surfaces then this lens element may be manufactured using suitable glass moulding techniques or plastic-on-glass replication techniques. The other lens elements L1, L2 and L4 may be manufactured using moulding or replication techniques in glass or a plastics material.

From reading the present disclosure, other modifications will be apparent to persons skilled in the art. Such modifications may involve other features which are already known in the projection lens system art and which may be used instead of or in addition to features already described herein. Although claims have been formulated in this application to particular combinations of features, it should be understood that the scope of the disclosure of the present application also includes any novel feature or any novel combination of features disclosed herein either explicitly or implicitly, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

## TABLE I

|  |  | Polar radius mm | Axial separation mm | Refractive Index |
|---|---|---|---|---|
| FP | S1 | 300.0 |  |  |
|  |  |  | 10.00 | 1.57 |
|  | S2 | 290.0 |  |  |
| M |  |  | 6.00 | 1.43 |
|  | S3 | 284.0 |  |  |
| L1 |  |  | 5.00 | 1.49 |
|  | S4 | 179.5 |  |  |
|  |  |  | 44.16 | 1.00 |
|  | S5 | −145.3 |  |  |
| L2 |  |  | 6.00 | 1.49 |
|  | S6 | −197.9 |  |  |
|  |  |  | 6.89 | 1.00 |
|  | S7 | 141.2 |  |  |
| L3 |  |  | 30.24 | 1.62 |
|  | S8 | −114.5 |  |  |
|  |  |  | 42.29 | 1.00 |
|  | S9 | −224.7 |  |  |
| L4 |  |  | 10.00 | 1.49 |
|  | S10 | −81.7 |  |  |

Aspheric surfaces

|  | S4 | S6 | S9 |
|---|---|---|---|
| C | .005572 | −.005054 | −.004451 |
| e | 1.0 | 1.0 | 1.0 |
| $a_4$ | $.6030 \times 10^{-5}$ | $.5164 \times 10^{-6}$ | $-.3268 \times 10^{-6}$ |
| $a_6$ | $-.2939 \times 10^{-8}$ | $.5782 \times 10^{-10}$ | $-.1693 \times 10^{-9}$ |
| $a_8$ | $.9391 \times 10^{-12}$ | $-.7363 \times 10^{-14}$ | $.8000 \times 10^{-13}$ |
| $a_{10}$ | $-.1385 \times 10^{-15}$ | $.1256 \times 10^{-16}$ | $-.2262 \times 10^{-16}$ |

Powers of elements

|  | Focal length mm | Power $mm^{-1}$ | Relative power |
|---|---|---|---|
| Complete lens | 95.57 | .0105 | 1.00 |
| FP + M + L1 | −956.4 | −.0010 | −.10 |
| L2 | −1147.0 | −.0009 | −.08 |
| L3 | 106.1 | .0094 | .90 |
| L4 | 253.3 | .0039 | .38 |

## TABLE II

| | | Polar radius mm | Axial separation mm | Refractive Index |
|---|---|---|---|---|
| FP | S1 | 350.0 | | |
| | | | 13.07 | 1.57 |
| | S2 | plane | | |
| M | | | 3.00 | 1.43 |
| | S3 | 83.3 | | |
| L1 | | | 5.00 | 1.49 |
| | S4 | 101.3 | | |
| | | | 43.85 | 1.00 |
| L2 | S5 | −114.7 | | |
| | | | 6.00 | 1.49 |
| | S6 | −166.8 | | |
| | | | 5.48 | 1.00 |
| L3 | S7 | 130.7 | | |
| | | | 29.92 | 1.62 |
| | S8 | −108.3 | | |
| | | | 39.07 | 1.00 |
| L4 | S9 | −182.2 | | |
| | | | 10.00 | 1.49 |
| | S10 | −75.6 | | |

### Aspheric surfaces

| | S4 | S6 | S9 |
|---|---|---|---|
| C | .009868 | −.005996 | −.005489 |
| e | 1.0 | 1.0 | 1.0 |
| $a_4$ | $.6018 \times 10^{-5}$ | $.6055 \times 10^{-6}$ | $-.3590 \times 10^{-6}$ |
| $a_6$ | $-.3396 \times 10^{-8}$ | $.5673 \times 10^{-10}$ | $-.2926 \times 10^{-9}$ |
| $a_8$ | $.1291 \times 10^{-11}$ | $-.6385 \times 10^{-14}$ | $.1484 \times 10^{-12}$ |
| $a_{10}$ | $-.2173 \times 10^{-15}$ | $.1722 \times 10^{-16}$ | $-.4227 \times 10^{-16}$ |

### Powers of elements

| | Focal length mm | Power $mm^{-1}$ | Relative power |
|---|---|---|---|
| Complete lens | 93.24 | .0107 | 1.00 |
| FP + M + L1 | −423.8 | −.0024 | −.22 |
| L2 | −772.0 | −.0013 | −.12 |
| L3 | 99.7 | .0100 | .94 |
| L4 | 253.2 | .0040 | .37 |

## TABLE III

| | | Polar radius mm | Axial separation mm | Refractive Index |
|---|---|---|---|---|
| FP | S1 | 350.0 | | |
| | | | 13.07 | 1.57 |
| M | S2 | plane | | |
| | | | 3.00 | 1.43 |
| L1 | S3 | 64.9 | | |
| | | | 5.00 | 1.49 |
| | S4 | 104.5 | | |
| | | | 42.01 | 1.00 |
| L2 | S5 | −264.9 | | |
| | | | 6.00 | 1.49 |
| | S6 | −362.3 | | |
| | | | 11.92 | 1.00 |
| L3 | S7 | 150.9 | | |
| | | | 32.23 | 1.62 |
| | S8 | −111.9 | | |
| | | | 41.47 | 1.00 |
| L4 | S9 | −181.9 | | |
| | | | 10.00 | 1.49 |
| | S10 | −80.1 | | |

### Aspheric surfaces

| | S4 | S6 | S9 |
|---|---|---|---|
| c | .009572 | −.002760 | −.005496 |
| e | 1.0 | 1.0 | 1.0 |
| $a_4$ | $.5781 \times 10^{-5}$ | $.3643 \times 10^{-6}$ | $-.3809 \times 10^{-6}$ |
| $a_6$ | $-.2961 \times 10^{-8}$ | $.1413 \times 10^{-9}$ | $-.6873 \times 10^{-10}$ |
| $a_8$ | $.9540 \times 10^{-12}$ | $-.4850 \times 10^{-13}$ | $.3009 \times 10^{-14}$ |
| $a_{10}$ | $-.1321 \times 10^{-15}$ | $.1482 \times 10^{-16}$ | $-.3020 \times 10^{-17}$ |

### Powers of elements

| | Focal length mm | Power $mm^{-1}$ | Relative power |
|---|---|---|---|
| Complete lens | 97.34 | .0103 | 1.00 |
| FP + M + L1 | −501.0 | −.0020 | −.19 |
| L2 | −2033.0 | −.0005 | −.05 |
| L3 | 108.0 | .0093 | .90 |
| L4 | 280.0 | .0036 | .35 |

**Claims**

1. A lens system for projecting an enlarged image of a concave object surface onto a planar display screen, characterised in that the lens system comprises a first lens element for arrangement adjacent the object surface and, arranged sequentially following the first lens element, second, third and fourth lens elements having respective powers K2, K3 and K4 selected such that the power K2 of the second lens element lies in the range of from about -0.2K to about 0.0K, the power K3 of the third lens element lies in the range of from about 0.75K to about 1.00K and the power K4 of the fourth lens element lies in the range of from about 0.3K to about 0.45K, where K is the power of the lens system, the first lens element having a power selected such that when the first lens element is arranged adjacent the object surface the first lens element has an effective power K1 which is negative with respect to the power K of the lens system, and at least two of the lens elements each having at least one aspheric surface.

2. A lens system according to Claim 1, further characterised in that the third lens element is formed of glass whilst the first, second and fourth lens elements are formed of a plastics material.

3. A lens system according to Claim 1 or 2, further characterised in that a coupling medium element is provided in contact with the first lens element for positioning between the first lens element and the object surface.

4. A lens system according to Claim 3, further characterised in that the coupling medium element comprises a liquid coolant for the object surface.

5. A lens system according to any one of the preceding claims, further characterised in that the first, second and fourth lens elements each have at least one aspherical surface.

6. A lens system according to claim 5, further characterised in that the surfaces of the first, second and fourth lens elements facing towards the third lens element are aspherical.

7. A lens system according to any one of the preceding claims, further characterised in that both surfaces of the third lens element are spherical.

8. A lens system according to any one of the preceding claims, further characterised in that the lens system in combination with the face plate of a cathode ray tube having an interior surface providing the object surface, which object surface is concave towards the lens system, is described substantially as set out in Table I, Table II or Table III.

9. A projection system comprising a cathode ray tube having a faceplate with an interior surface providing the concave object surface and a lens system in accordance with any one of the preceding claims.

10. A projection system according to Claim 9, further characterised in that the object surface is concave towards the lens system and the faceplate is provided with an interference filter.

FIG.1

FIG.2

FIG.3

FIG. 4

FIG.5

FIG. 6

A=66·6mm

A=60·0mm

A=50·0mm

A=40·0mm

A=25·0mm

A=0·0mm

c/mm

FIG. 7